# FASCICULE DE BREVET EUROPEEN

(11) **EP 1 530 891 B1**
(45) Date de publication et mention de la délivrance du brevet: **28.06.2006**
(21) Numéro de dépôt: 04364068.9
(22) Date de dépôt: 09.11.2004
(51) Int. Cl.: A01C 7/12

(54) **Dispositif de dosage et de distribution de graines pour semoir**
Vorrichtung zum Dosieren und Verteilen von Saatgut für eine Sämaschine
Device for metering and distributing grains for a sowing machine

(30) Priorité: 14.11.2003 FR 0313328
(43) Date de publication de la demande: 18.05.2005
(73) Titulaire: SULKY-BUREL S.A.S, 35220 Chateaubourg (FR)
(72) Inventeur: Clochard, Daniel, 35113 Domagné (FR); Monnerie, Jacques-Olivier, 35500 Vitré (FR)
(74) Mandataire: Le Faou, Daniel

(56) Documents cités:
- EP-A- 0 635 195
- DE-A- 19 544 237
- DE-C- 609 579
- GB-A- 191 018 990

## Description

La présente invention concerne un dispositif de dosage et de distribution de graines pour semoir.

Il peut s'agir particulièrement - mais non obligatoirement - d'un doseur du type centralisé et tel que celui décrit par exemple dans le document WO 98/12512 ; dans un doseur de ce genre, les graines fournies par le doseur sont transférées par voie pneumatique à une tête de répartition et de distribution qui les projette dans un ensemble de tubulures flexibles connectées chacune à un socle semeur apte à déposer les graines en ligne dans le sol.

Plus particulièrement, le dispositif faisant l'objet de l'invention comporte un arbre cannelé rotatif monté à l'intérieur d'un boîtier qui présente une ouverture d'entrée des graines disposée à la base d'une trémie et une ouverture de sortie des graines hors du boîtier.

Les cannelures constituent des poches aptes à transférer un certain volume de graines depuis l'ouverture d'entrée jusqu'à l'ouverture de sortie.

Afin de régler le dosage et le débit, il est possible d'agir sur la vitesse de rotation de l'arbre cannelé et sur le volume utile des cannelures.

Pour modifier le volume des cannelures, il est connu de les obturer sur une partie plus ou moins grande de leur longueur au moyen d'un ensemble de doigts de remplissage axialement mobile, chacun à l'intérieur d'une cannelure.

Des dispositifs de ce genre sont décrits par exemple dans les documents DE 807 722 et GB 18 990 (A.D.1910).

Selon le dispositif décrit dans le DE 807 722, le volume utile d'une cannelure est défini d'un côté par la face frontale du doigt (de forme cylindrique) qui y est inséré et, de l'autre côté, par la paroi d'extrémité de l'arbre cannelé ; ces faces sont planes et disposées perpendiculairement à l'axe de l'arbre cannelé.

Il se pose ainsi un problème de tassement des graines pour les petits dosages, c'est-à-dire lorsque le volume utile des cannelures est faible, voire très faible ; des graines risquent de se trouver coincées et retenues entre les deux faces frontales.

Il se pose également un problème de fonctionnement du dispositif avec de petites graines et à faible volume.

En effet, la section transversale de chaque cannelure est constante, quel que soit le degré d'enfoncement des doigts dans leurs cannelures.

Or, il est souhaitable que pour de petites graines et de faible débit, cette section soit nettement plus faible que pour de grosses graines.

A défaut, la distribution se fait de manière hétérogène.

Selon le GB 18 990 (A.D. 1910) les faces en regard d'une part d'une extrémité des cannelures et d'autre part des doigts de remplissage sont biseautées, ce qui résout le problème de coincement des graines évoqué plus haut.

Il subsiste néanmoins le problème de dosage de petites graines à faible débit, car les poches globalement hémisphériques correspondant au dosage le plus faible, lorsque les doigts de remplissage sont en fin de course, possèdent un volume déterminé non négligeable, trop grand pour obtenir un résultat convenable avec de très petites graines.

Dans le dispositif qui fait l'objet du WO 98/12 512 mentionné plus haut, l'agencement est globalement similaire à celui du GB 18 990 (A.D.1910). Cependant, les organes obturateurs qui sont mobiles dans les rainures sont des tiges qui portent une palette articulée à leur extrémité libre située dans la cannelure. Ce dispositif est relativement complexe et fragile. En outre, il ne permet pas non plus de résoudre le problème lié au dosage de graines de très faibles dimensions.

On connaît par ailleurs, par le document EP 0 635 195 un agencement selon lequel l'arbre cannelé rotatif est solidaire en translation d'un tambour cylindrique qui est immobilisé en rotation.

Cet ensemble est mobile en translation axiale, de sorte qu'il est possible de faire ressortir plus au moins une extrémité de l'arbre cannelé hors du boîtier afin de faire varier le volume utile des cannelures qui est situé à l'intérieur du boîtier, et qui assure le transfert des graines de l'ouverture d'entrée à l'ouverture de sortie.

Des moyens de réglage tel qu'un système vis-écrou permettent de déplacer cet ensemble axialement afin de régler le dosage.

Il est prévu une série de doigts axialement mobiles, de l'extérieur vers l'intérieur du boîtier, qui permettent d'obturer complètement dans la direction longitudinale, mais partiellement en direction radiale, la partie utile de la cannelure, partie qui se trouve à l'intérieur du boîtier.

L'élément obturateur est ainsi conformé qu'il réduit donc d'un facteur donné (par exemple en le divisant par deux) le volume de la cannelure, ce qui permet alors de travailler avec des graines de plus petites dimensions et à dosage plus faible.

Pour améliorer l'homogénéité du dosage, la surface de chaque doigt obturateur possède un relief (dent) disposé longitudinalement dans sa partie centrale, ce qui permet ainsi de subdiviser la surface de fond de cannelure en deux portions.

On observera cependant que les faces frontales en regard sont perpendiculaires à l'axe de l'arbre, et le problème de coincement des graines en fin de course subsiste, aussi bien lorsque les éléments obturateurs sont utilisés que lorsqu'ils ne le sont pas.

De plus, un tel distributeur est adapté au traitement de deux dimensions particulières de graines, des « grosses » ou des « moyennes ».

Il ne permet pas de s'adapter de manière continue à une grande variété dimensionnelle de graines, pour de très faible niveau de dosage.

L'invention vise à résoudre ces problèmes.

Le dispositif de dosage et de distribution de graines qui fait l'objet de l'invention comprend, de manière connue, un boîtier présentant une ouverture d'entrée des graines disposée à la base d'une trémie et une ouverture de sortie, ce boîtier étant pourvu intérieurement d'un ensemble mobile en translation axiale suivant un axe horizontal, le dit ensemble étant composé d'un tambour cylindrique qui est immobilisé en rotation et d'un arbre de distribution rotatif cannelé qui est accolé coaxialement au tambour, des moyens de réglage permettant de déplacer cet ensemble axialement de manière à faire ressortir plus ou moins l'extrémité de l'arbre cannelé hors du boîtier afin de faire varier le volume utile des cannelures assurant le transfert des graines de l'ouverture d'entrée à l'ouverture de sortie, l'arbre cannelé traversant avec un faible jeu une bague dont il est solidaire en rotation et qui est guidée en rotation mais immobilisée en translation, dans un élément de paroi du boîtier, la chambre de dosage des graines se trouvant délimitée transversalement, c'est-à-dire perpendiculairement aux cannelures, d'un côté par la face frontale du tambour qui est adjacente à l'arbre cannelé et, de l'autre côté, par la face frontale de la bague qui est tournée vers l'intérieur du boîtier.

Conformément à l'invention, les dites faces frontales du tambour et de la bague ont une forme essentiellement tronconique et/ou s'inscrivent dans une surface essentiellement tronconique, dont les sommets sont toujours dirigés tous deux du même côté.

Cette disposition « en biseau » des faces en regard évite le risque d'un coincement des graines, car celles-ci ont tendance à se déplacer sous l'effet de la force centrifuge vers l'extérieur et donc de s'échapper, quelle que soit leur taille.

Grâce à elle, il est possible de faire fonctionner le dispositif avec une chambre utile de très faible volume, tout en assurant une distribution homogène des graines, même très petites.

Par ailleurs, selon un certain nombre de caractéristiques avantageuses possibles de l'invention :
- la valeur du demi-angle au sommet de ladite forme ou surface tronconique est comprise entre 40 et 65°, et est de préférence de l'ordre de 50 à 55°.
- ladite bague porte une denture périphérique qui engrène avec un pignon moteur apte à entraîner en rotation la bague et l'arbre cannelé ;
- la bague comprend une pluralité de doigts qui s'engagent dans les cannelures de l'arbre cannelé et sont séparés les uns des autres par les nervures de ce dernier, ladite face frontale de la bague étant composée d'un ensemble de facettes formées chacune sur l'un de ces doigts, ces facettes s'inscrivant dans une même surface tronconique ;
- chaque facette est subdivisée par une nervure centrale de faible hauteur, dont la direction coupe ledit axe horizontal;
- la face frontale de cette nervure centrale forme avec ledit axe horizontal un angle légèrement supérieur à celui formé par ladite facette ;
- cet angle est sensiblement égal à l'angle de la face frontale dudit tambour, de sorte qu'en fin de course de l'arbre cannelé hors du boîtier, lesdites nervures viennent en appui contre cette face frontale ;
- il comporte un joint souple en forme de lamelle horizontale, fixée au boîtier et s'étendant au niveau de l'ouverture de sortie des graines, une portion de cette lamelle prenant appui contre la surface du tambour et sa portion restante se trouvant en regard de l'arbre cannelé ;
- il comporte un dispositif d'accouplement permettant d'entraîner en rotation l'arbre cannelé de manière sélective, à partir d'un pignon moteur, soit par l'intermédiaire de ladite bague, ceci avec une certaine réduction de vitesse, soit par l'intermédiaire d'un jeu de pignons de même diamètre dont l'un est solidaire en rotation de l'axe de l'arbre cannelé, ceci sans modification de vitesse ou avec un rapport de vitesses différent ;
- lesdites faces frontales du tambour et de la bague comportent une zone extérieure tronconique, et une zone intérieure plane, sensiblement orthogonale par rapport audit axe horizontal ;
- lesdites cannelures sont garnies, à leur extrémité située au voisinage du tambour, de tampons souples, élastiquement déformables sous l'action de la poussée des doigts en fin de course de déplacement de ces derniers, dans le sens de l'obturation des cannelures.

D'autres caractéristiques et avantages de l'invention apparaîtront de la description qui va maintenant en être faite, en référence aux dessins annexés.

Sur ces dessins :
Les figures 1, 2 et 3 sont respectivement des vues de face, de côté (en coupe axiale) et de dessus d'un dispositif conforme à l'invention.
La figure 4 est une vue en perspective représentant un ensemble constitué de l'arbre cannelé, de la bague et du tambour.
La figure 5 est une vue en perspective de l'arbre cannelé.
La figure 6 est une vue en bout de l'ensemble de la figure 4, qui montre par ailleurs l'emplacement du joint.
La figure 7 est une vue schématique destinée à illustrer le principe de fonctionnement du dispositif.
Les figures 7A et 7B sont des vues en coupe, correspondant aux plans de section respectivement référencés A-A et B-B sur la figure 7.
La figure 8 est une vue de face de la bague.
La figure 9 est une vue de la même bague axialement coupée, le plan de coupe étant désigné IX-IX sur la figure 8.
La figure 10 est une vue générale du dispositif, en perspective.
Les figures 11, 12 et 13 sont des vues similaires à celle de la figure 7, qui représentent différentes positions de l'arbre cannelé, correspondant à une diminution progressive du volume utile de la chambre de dosage.
La figure 14 est une vue générale, en perspective, d'une variante du dispositif équipé d'un système de changement de vitesses.
Les figures 15 et 16 sont des vues de face partielles de la figure 14 montrant deux positions de travail différentes du système de changement de vitesses.
Les figures 17 et 18 sont des vues analogues à celle de la figure 7 qui représentent, respectivement, une première et une seconde variante du dispositif.
La figure 19 est une vue similaire à celle de la figure 19, qui montre un doigt de la bague dans une position proche de sa fin de course d'obturation de la cannelure.

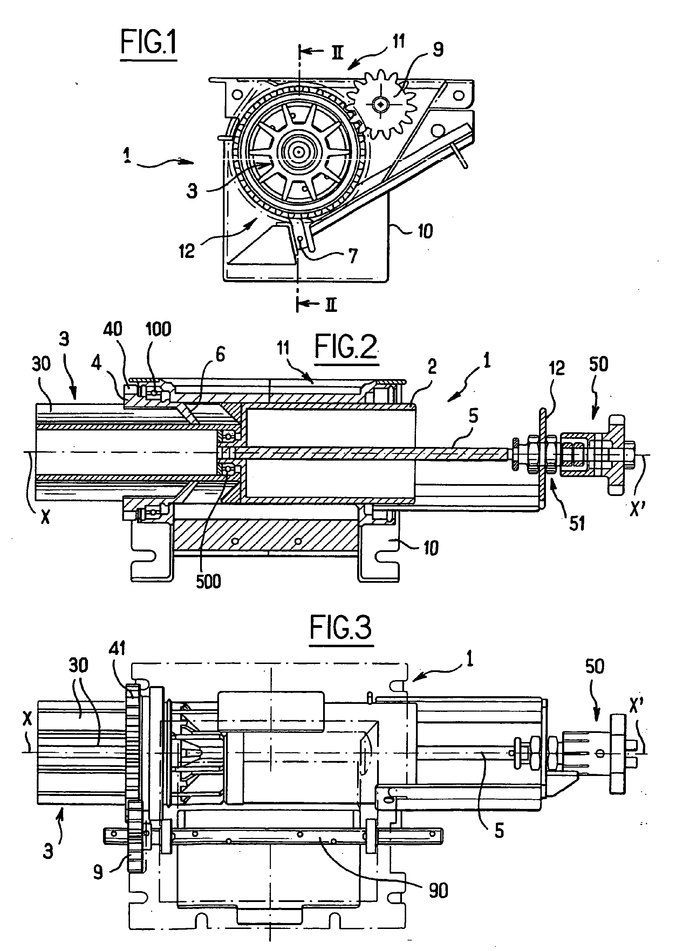

Le dispositif illustré sur les figures 1 à 3 est un dispositif de dosage et de distribution de graines destiné à équiper un semoir.

La référence 1 désigne le boîtier du dispositif, dont la paroi 10 présente une ouverture d'entrée des graines 11 et une ouverture de sortie 12.

Ce boîtier 1 est destiné à être monté à la base d'une trémie de stockage des graines à distribuer.

La référence 9 désigne un pignon d'entraînement du dispositif.

Ce pignon est entraîné par des moyens connus, par exemple par un moteur électrique ou par un réducteur de vitesse entraîné par le tracteur auquel le semoir est attelé.

En tout état de cause, des moyens non représentés de type connu sont prévus pour faire varier la vitesse de rotation du pignon moteur 9, de façon à pouvoir régler le débit de distribution des graines.

Ce dispositif comporte un ensemble mobile en translation composé d'un tambour cylindrique 2 et d'un arbre cannelé rotatif 3, qui sont montés coaxialement bout à bout ; leur axe commun, référencé XX', s'étend horizontalement.

Cet ensemble est monté à l'intérieur du boîtier 1, et des moyens appropriés, tels qu'une clavette par exemple, sont prévus pour immobiliser en rotation le tambour 2, tout en autorisant son déplacement en translation, conjointement avec l'arbre cannelé 3, selon l'axe X-X'.

L'arbre cannelé 3 est solidarisé en translation avec le tambour 2, à l'aide d'organes de liaison idoines, mais est mobile en rotation par rapport à ce dernier, grâce à l'interposition d'un roulement à billes 500.

Une tige 5 qui est déplaçable par un système d'entraînement à vis-écrou 51 entraîné par un organe de manoeuvre 50 permet de faire sortir plus ou moins hors du boîtier l'extrémité libre (située sur la gauche des figures 2 et 3) de l'arbre cannelé 3.

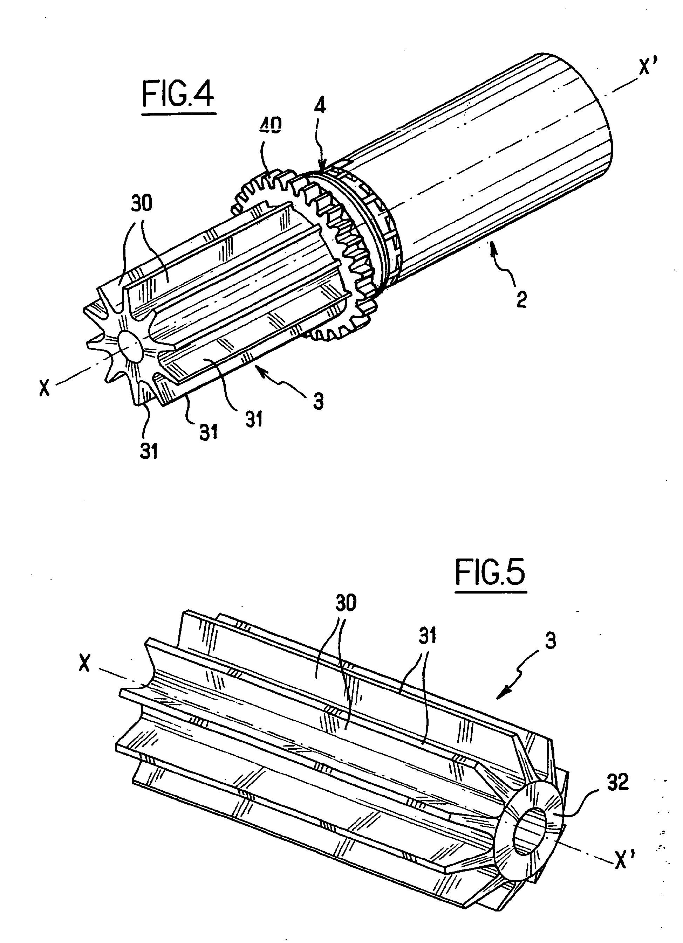

L'arbre cannelé possède, dans l'exemple illustré, dix cannelures identiques régulièrement réparties à 36° d'angle ; de manière connue, ces cannelures ont un profil approximativement en forme de cuvette de section en V à fond arrondi (voir notamment figures 4, 5 et 7B).

L'espace intérieur du boîtier est délimité d'un côté (vers la droite des figures 2 et 3) par le tambour 2, et de l'autre côté (vers la gauche de ces mêmes figures) par la paroi 6 d'une bague 7 qui est immobilisée en translation mais guidée en rotation au moyen d'un roulement à billes 100 dans la paroi du boîtier.

Cette bague 4 porte une denture périphérique 40 qui est en prise avec le pignon moteur 9 (voir figure 1). On notera (voir figure 3) que ce pignon est disposé à l'extrémité d'un axe rotatif 90 formant agitateur, apte à assurer un décompactage des graines avant leurs prises en charge par le doseur.

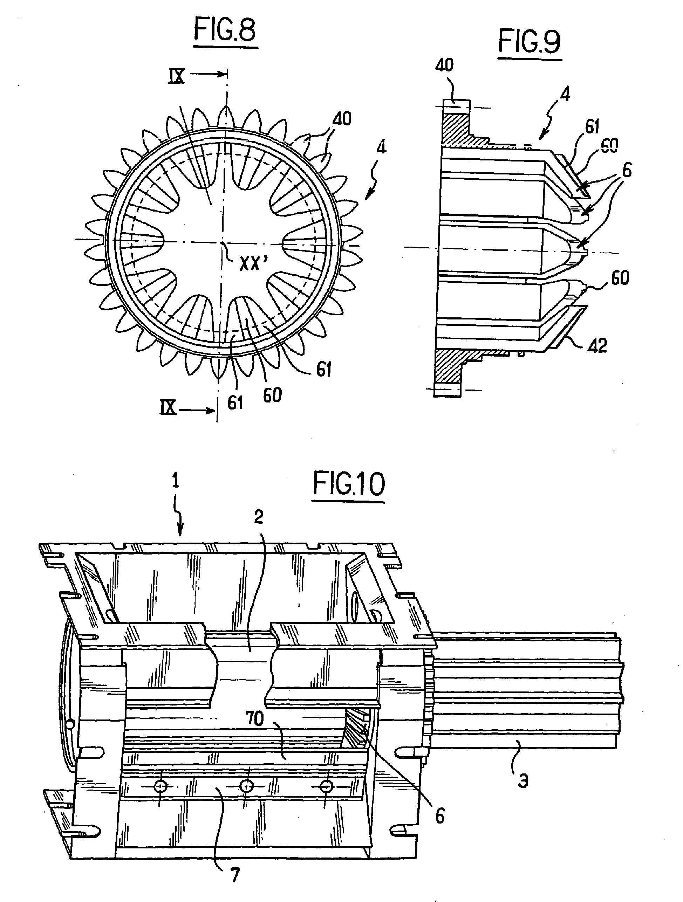

La bague 4 possède une portion interne 6 qui présente une ouverture centrale de contour complémentaire de celui de l'arbre cannelé 3 ; en fait, comme on le comprend à l'observation de la figure 8, cette partie 6 est composée d'un ensemble de dix doigts qui pénètrent chacun dans une cannelure 30, ceci avec un faible jeu.

L'arbre cannelé 3 peut donc coulisser librement à l'intérieur de la bague 6 lorsqu'on manoeuvre l'organe de réglage 50, dans un sens ou dans l'autre ; cependant, la bague 6 est solidaire en rotation de cet arbre 3.

La rotation de la bague 4 induit donc celle de l'arbre cannelé autour de l'axe XX'; le tambour 2 demeure, en revanche, fixe en rotation.

Selon une caractéristique essentielle de l'invention, les faces frontales 6 de la bague et 20 du tambour qui sont en regard l'une de l'autre ont une conformation en tronc de cône, les deux troncs de cônes ayant leur sommet dirigé du même côté, vers la droite si l'on considère les figures 2 et 3.

Chacun de ces deux troncs de cônes a un demi-angle au sommet dont la valeur est comprise entre 40 et 65°, et est de préférence de l'ordre de 50 à 55°.

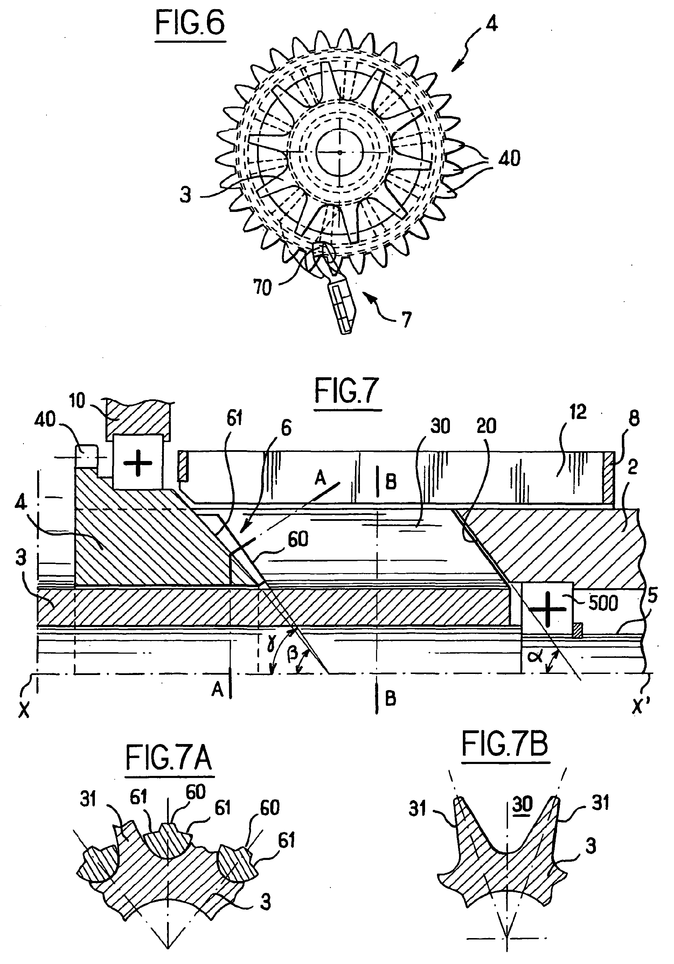

Comme on le comprend notamment à l'observation des figures 6 à 9, la face frontale 6 de la bague 4 est en réalité composée d'un ensemble de dix facettes 61 qui s'inscrivent dans une même surface tronconique.

De plus, selon une caractéristique particulièrement intéressante de l'invention, chacune de ces facettes 61 présente, en sa partie centrale, une nervure centrale 61. Celle-ci à la forme d'une dent qui s'étend selon une génératrice de tronc de cône sur toute la longueur ou pratiquement toute la longueur de la facette 61.

Elle a une faible largeur et une faible épaisseur, comme cela ressort de l'observation des figures 7A, 8 et 9 notamment.

Sur la figure 7 on a désigné par les références α, β, γ, les demi-angles au sommet correspondant aux troncs de cônes constitués respectivement par la face frontale 20 du tambour 2, par les facettes 61, et par la face supérieure des nervures 60.

De préférence, les angles α et γ sont égaux ou pratiquement égaux.

A titre indicatif, ces angles ont chacun une valeur de 56°, tandis que l'angle β a une valeur de 50°.

La figure 7 représente un montage schématique des principaux éléments du doseur.

L'arbre cannelé 3 est un arbre tubulaire emmanché sur un arbre 5 d'axe XX', guidé en rotation dans le tambour 2 au moyen du roulement 500.

La bague 4 est guidée en rotation dans un élément de paroi du boîtier 10 par le roulement 100.

La paroi 8 représente le contour de l'ouverture d'entrée 12 par laquelle les graines arrivent dans le dispositif.

Sur la figure 7, on a à faire à un dosage relativement grand, le volume utile des cannelures 30 s'étendant sur plus de la moitié de l'ouverture d'entrée 12.

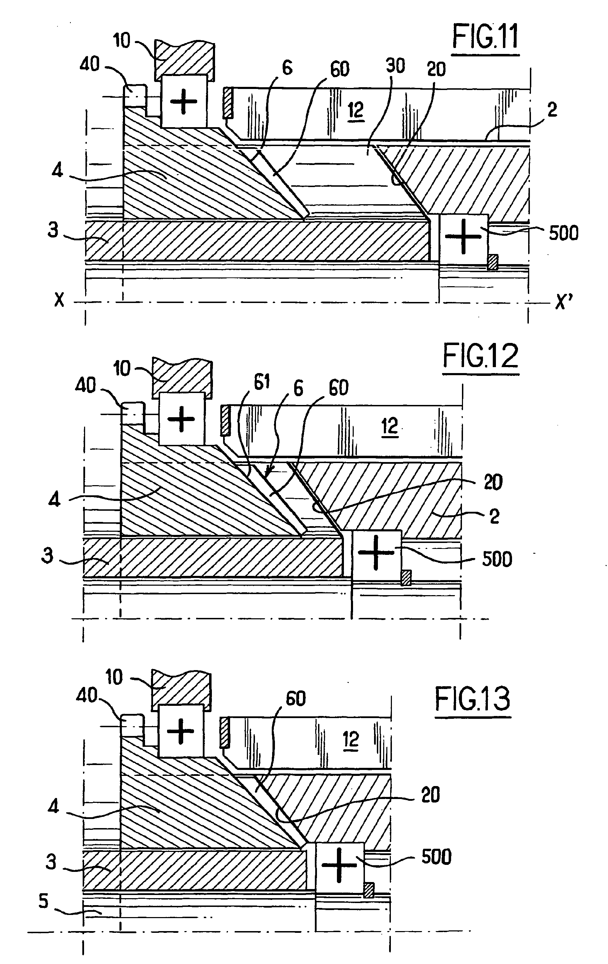

En référence aux figures 11 à 13, nous allons maintenant expliquer comment fonctionne le dispositif avec un volume de plus en plus petit.

On note, à l'observation de la figure 11, que le volume utile de dosage a été réduit par rapport à la situation de la figure 7 ; pour cela l'ensemble 2-3 a été déplacé vers la gauche, l'arbre cannelé 3 étant ressorti sur une plus grande longueur hors de la bague 4, vers la gauche si l'on considère la figure 11.

Toutefois, le volume est encore relativement important, et il ne se pose aucun problème pour le transfert des graines.

En référence à la figure 12, on constate que le volume utile a été très sensiblement diminué, par suite du rapprochement des faces 20 et 61.

Cependant, durant ce déplacement, il ne se pose pas de problème de coincement ou de bourrage, car les graines peuvent glisser et/ou rouler sur les facettes 61 pour s'échapper vers l'extérieur, ce phénomène étant encore amplifié par l'effet de la centrifugation.

En référence à la figure 13, on constate que l'espace disponible est encore réduit, la nervure 60 venant en contact ou pratiquement en contact avec la face 20.

Cependant, il subsiste de part de chaque côté de ces dents un espace disponible autorisant le passage et l'échappement de graines de petites et de très petites dimensions ; grâce à la séparation centrale constituée par la présence de la nervure 60, la distribution demeure homogène pour ces petites graines.

Pour augmenter le dosage, on déplace en sens inverse l'ensemble tambour 2-arbre cannelé 3 (vers la droite sur les figures 11 à 13).

Sur les figures 6 et 10, on a représenté schématiquement un joint souple 70 ; il s'agit d'une lamelle en matériau élastomère qui est fixée à un support 7 monté sur le boîtier ; ce joint, ou bavette, s'étend sur toute la partie utile de l'ouverture de sortie des graines ; il s'appuie plus ou moins contre le tambour fixe 2, en fonction du déplacement de ce dernier ; en tout état de cause, il est toujours convenablement supporté du côté du tambour, ce qui lui permet de travailler à la déformation dans de bonnes conditions, quel que soit le degré du dosage, et d'assurer ainsi le freinage et le contrôle des graines quittant le dispositif.

Ce dispositif et les différents éléments qui le composent ont naturellement des dimensions adaptées aux capacités du semoir et au débit global qui lui est demandé.

À titre indicatif, la bague 6 a un diamètre extérieur de l'ordre de 130 à 140 mm, l'arbre cannelé 3 a une longueur de l'ordre de 225 mm, un diamètre de sa partie tubulaire (qui correspond au fond des cannelures) de l'ordre de 53 mm ; les nervures ont par exemple une profondeur de 20 mm et une largeur d'entrée de l'ordre de 25 mm.

Ce dispositif a l'intérêt majeur d'être polyvalent c'est-à-dire de s'adapter à différentes dimensions de graines, sans risque de bourrage ou de coincement, et avec une capacité de distribution homogène même pour des graines petites et très petites.

On ne sortirait pas du cadre de l'invention en inversant le sens de la conicité des faces 20 et 61, les sommets des parties tronconiques se trouvant alors situé non plus sur la droite mais sur la gauche si on considère la représentation de la figure 7.

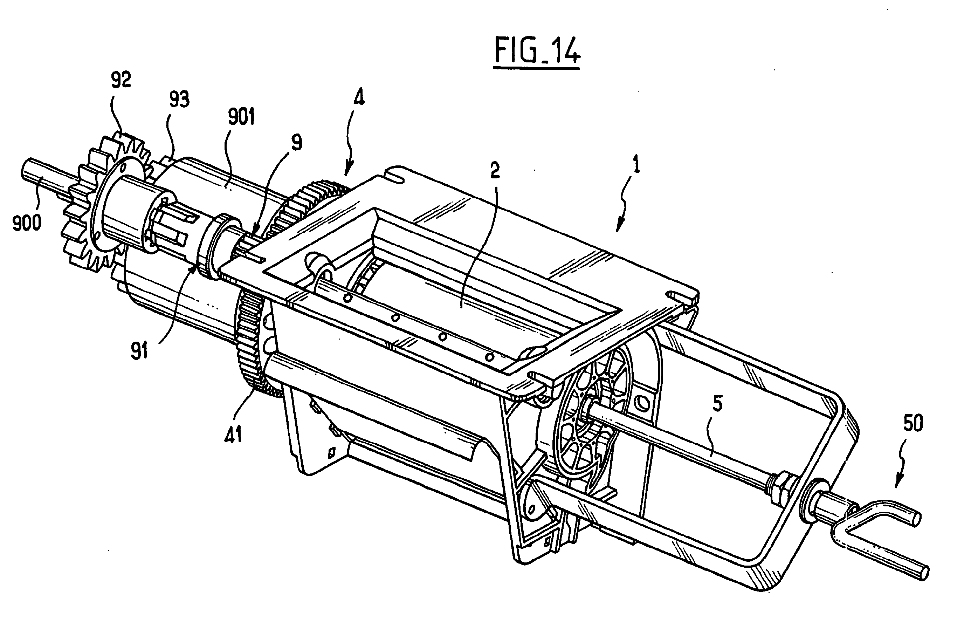

Le mode de réalisation du dispositif qui est représenté sur les figures 14 à 17 est équipé d'un système de changement de vitesses.

La portion d'extrémité de l'arbre cannelé 3 qui ressort hors du boîtier 1 est entourée d'un capot protecteur (carter) fixe 901, ce qui explique qu'elle ne soit pas visible sur les figures.

Cette portion d'arbre se prolonge axialement par un axe 300 qui porte un pignon 93 dont il est solidaire en rotation. Toutefois, le pignon 93 est immobilisé en translation dans la paroi du carter 901.

Le pignon moteur 9 est, quant à lui, porté par un axe 900 en deux parties disposées bout à bout et susceptibles d'être solidarisées par un dispositif d'accouplement 91, par exemple du type baladeur à crabots.

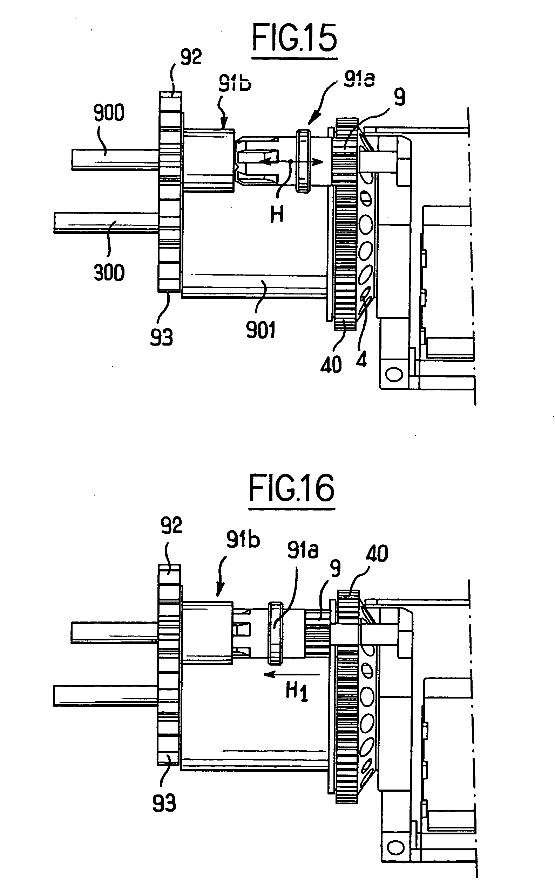

Ce dernier comprend une partie fixe 91b et une partie mobile 91a dont le déplacement est symbolisé par la double flèche H sur la figure 15.

Les axes 300 et 900 sont parallèles.

L'une de ces parties, mobile en translation axiale, porte la partie de crabot 91a, ainsi que le pignon 9, dont elle est solidaire en rotation et en translation; l'autre partie, guidée en rotation dans la paroi du carter 901, mais fixe en translation axiale, porte la partie de crabot 91b ainsi qu'un pignon 93.

Le pignon 9 est sensiblement plus petit que le pignon 40 (constitué par la bague dentée 4) avec lequel il est en prise. Le rapport de démultiplication, qui correspond à celui des diamètres, est par exemple de 5.

Le pignon 93 est constamment en prise avec le pignon 92.

Ces deux pignons ont le même diamètre. Leur rapport de démultiplication est donc de 1.

Pour entraîner l'arbre 3 à faible vitesse, on désaccouple les parties 91a et 91b (voir figure 15).

Le pignon moteur 9 entraîne alors l'arbre 3 par l'intermédiaire de la bague 40, comme dans le mode de réalisation décrit précédemment (avec un rapport de vitesses 1/5). Le pignon 92 est fou; il est entraîné par le pignon 93 (qui tourne avec l'arbre 3) mais sans que cette rotation influe sur le fonctionnement du dispositif.

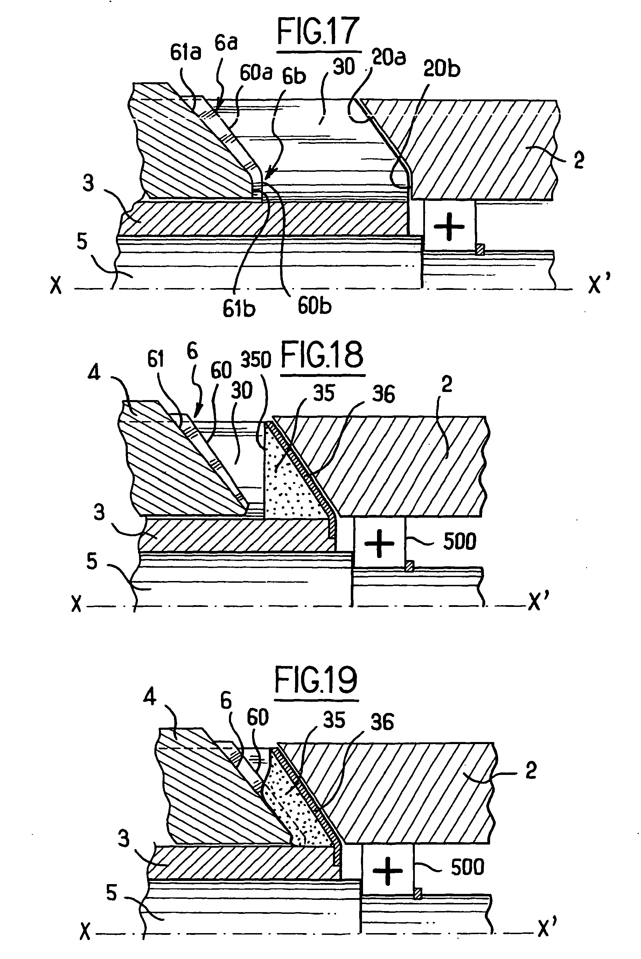

Pour entraîner l'arbre 3 à vitesse normale, on accouple les parties 91 a et 91 b, ceci en déplaçant axialement -vers la gauche de la figure 16- l'ensemble constitué par la partie 91 a et le pignon 9 (figure 16, flèche H₁).

La course de déplacement est choisie de façon à être légèrement supérieure à l'épaisseur des pignons 9 et 40.

Ainsi le pignon 9 se trouve décalé axialement par rapport au pignon 40, et leurs dentures ne sont plus en prise.

En revanche, le pignon 92 est positivement entraîné, et entraîne à son tour, via le pignon 93, l'arbre cannelé 3, ceci a à la même vitesse que celle du pignon moteur 9. La bague 4 est folle; il est entraînée par l'arbre 3, mais sans que cette rotation influe sur le fonctionnement du dispositif.

Dans un mode de réalisation possible, le pignon moteur 9 est entraîné par un moteur électrique piloté par un ordinateur embarqué.

En raison de l'inclinaison des faces frontales 6 des doigts de la bague 4, il peut se poser dans certaines conditions de fonctionnement, en particulier à grande vitesse, un problème de mauvais remplissage des cannelures 30.

Les variantes illustrées sur les figures 17 et 18-19 permettent de pallier cette difficulté.

Selon la variante de la figure 17, les faces frontales en regard 6 et 20 sont de formes tronconique seulement dans leur zone extérieure 6a, respectivement 20a; leur zone intérieure 6b, respectivement 20b est sensiblement plane, perpendiculaire à l'axe X-X'.

Cette disposition favorise le remplissage du fond de cannelures à vitesse élevée, car il n'y a pas d'effet de rampe à ce niveau du fait que les faces 60b-61b d'un côté, et 20b de l'autre côté, ne sont pas inclinées.

Selon la variante de la figure 18, un tampon 35 en matériau élastiquement déformable, par exemple en mousse synthétique, est disposée dans chaque rainure 30, obturant son extrémité tournée vers la face 20. Elle est solidaire de l'arbre cannelé 3, contre laquelle elle est maintenue au moyen d'une coupelle métallique tronconique indéformable 36, qui est fixée sur cet arbre et est positionnée à proximité de la face 20 du tambour 2.

La garniture souple 35 présente une face plane 350 disposée orthogonalement par rapport à l'axe X-X', fermant l'extrémité de la cannelure 30. A cet effet, elle possède une section droite en forme de triangle rectangle.

Comme pour la partie 20b de la première variante, la disposition orthogonale de la face 350 du tampon 35 favorise le remplissage du fond de cannelures à vitesse élevée.

La présence de cette garniture ne contrarie cependant pas le fonctionnement du dispositif, un déplacement axial des doigts dans le sens de l'obturation des cannelures demeurant possible, sur une course étendue, par suite de l'écrasement de la garniture 35 en fin de course (voir figure 19). Lorsque le tampon est écrasé, on comprend que le volume disponible pour les graines se trouve notablement réduit, ce qui permet de travailler à des débits très faibles.

## Revendications

1. Dispositif de dosage et de distribution de graines pour semoir, qui comprend un boîtier (1) présentant une ouverture d'entrée (11) des graines disposée à la base d'une trémie et une ouverture de sortie (12) des graines avec un dosage déterminé, ce boîtier (1) étant pourvu intérieurement d'un ensemble mobile en translation axiale suivant un axe horizontal (X-X'), ledit ensemble étant composé d'un tambour cylindrique (2) immobilisé en rotation et d'un arbre de distribution rotatif cannelé (3) accolé coaxialement au tambour (2), des moyens de réglage (50,51) permettant de déplacer cet ensemble axialement de manière à faire ressortir plus ou moins l'extrémité de l'arbre cannelé (3) hors du boîtier afin de faire varier le volume utile des cannelures (30) assurant le transfert des graines de l'ouverture d'entrée (11) à l'ouverture de sortie (12), cet arbre cannelé (3) traversant avec un faible jeu une bague (4) dont il est solidaire en rotation et qui est guidée en rotation mais immobilisée en translation, dans un élément de paroi (10) du boîtier, la chambre de dosage des graines se trouvant délimitée transversalement, c'est-à-dire perpendiculairement aux cannelures (30), d'un côté par la face frontale (20) du tambour qui est adjacente à l'arbre cannelé et, de l'autre côté, par la face frontale (6) de la bague qui est tournée vers l'intérieur du boîtier, **caractérisé par le fait que** lesdites faces frontales (20) du tambour (2) et (6) de la bague (4) ont une forme essentiellement tronconique et/ou s'inscrivent dans une surface essentiellement tronconique, dont les sommets sont dirigés du même côté.

2. Dispositif de dosage et de distribution de graines selon la revendication 1, **caractérisé par le fait que** la valeur du demi-angle au sommet de ladite forme ou surface tronconique est comprise entre 40 et 65°, et est de préférence de l'ordre de 50 à 55°.

3. Dispositif de dosage et de distribution de graines selon la revendication 1 ou 2, **caractérisé par le fait que** ladite bague (4) porte une denture périphérique (40) qui engrène avec un pignon moteur (9) apte à entraîner en rotation la bague (4) et l'arbre cannelé (3).

4. Dispositif de dosage et de distribution de graines selon l'une des revendications 1 à 3, **caractérisé par le fait que** la bague (6) comprend une pluralité de doigts qui s'engagent dans les cannelures (30) de l'arbre cannelé (3) et sont séparés les uns des autres par les nervures (31) de ce dernier, ladite face frontale de la bague (6) étant composée d'un ensemble de facettes (61) formées chacune sur l'un de ces doigts, ces facettes s'inscrivant dans une même surface tronconique.

5. Dispositif de dosage et de distribution de graines selon la revendication 4, **caractérisé par le fait que** chaque facette (61) est subdivisée par une nervure centrale (60) de faible hauteur, dont la direction coupe ledit axe horizontal X-X'.

6. Dispositif de dosage et de distribution de graines selon la revendication 5, **caractérisé par le fait que** la face frontale de cette nervure centrale (60) forme avec ledit axe horizontal (X-X') un angle (γ) légèrement supérieur à celui (β) formé par ladite facette (61).

7. Dispositif de dosage et de distribution de graines selon la revendication 6, **caractérisé par le fait que** cet angle (γ) est sensiblement égal à l'angle (α) de la face frontale (20) dudit tambour (2), de sorte qu'en fin de course de l'arbre cannelé (3) hors du boîtier, lesdites nervures (60) viennent en appui contre cette face frontale (20).

8. Dispositif de dosage et de distribution de graines selon l'une les revendications précédentes, **caractérisé par le fait qu'**il comporte un joint souple en forme de lamelle horizontale (70), fixée au boîtier (1) et s'étendant au niveau de l'ouverture de sortie (12) des graines, une portion de cette lamelle prenant appui contre la surface du tambour (2) et sa portion restante se trouvant en regard de l'arbre cannelé (3).

9. Dispositif de dosage et de distribution de graines selon l'une les revendications précédentes, **caractérisé par le fait qu'**il comporte un dispositif d'accouplement (91) permettant d'entraîner en rotation l'arbre cannelé (3) de manière sélective, à partir d'un pignon moteur (9), soit par l'intermédiaire de ladite bague (4), ceci avec une certaine réduction de vitesse, soit par l'intermédiaire d'un jeu de pignons de même diamètre (92, 93) dont l'un (93) est solidaire en rotation de l'axe de l'arbre cannelé (3), ceci sans modification de vitesse ou avec un rapport de vitesses différent.

10. Dispositif de dosage et de distribution de graines selon l'une les revendications précédentes, **caractérisé par le fait que** lesdites faces frontales (20) du tambour (2) et (6) de la bague (4) comportent une zone extérieure (20a, respectivement 6a) tronconique, et une zone intérieure (20b, respectivement 6b) plane, sensiblement orthogonale par rapport audit axe horizontal (X-X').

11. Dispositif de dosage et de distribution de graines selon l'une les revendications précédentes, **caractérisé par le fait que** lesdites cannelures (30) sont garnies, à leur extrémité située au voisinage du tambour (2), de tampons souples (35), élastiquement déformables sous l'action de la poussée des doigts (4) en fin de course de ces derniers, dans le sens de l'obturation des cannelures.

## Claims

1. A device for measuring out and dispensing seeds in a seed drill, the device comprising a box (1) presenting an inlet opening (11) for seeds, said opening being located at the base of a hopper, and an outlet opening (12) for delivering seeds at a determined rate, the box (1) being provided internally with a unit movable in axial translation along a horizontal axis (X-X'), said unit being made up of a cylindrical drum (2) prevented from rotating and a fluted rotary dispenser shaft (3) axially adjacent to the drum (2), adjustment means (50, 51) enabling said unit to be moved axially so as to cause the end of the fluted shaft (3) to extend beyond the box to a greater or lesser extent so as to vary the working volume of the fluting (30) used for transferring seeds from the inlet opening (11) to the outlet opening (12), the fluted shaft (3) passing through a ring (4) with small clearance and being constrained in rotation therewith, which ring is guided in rotation but prevented from moving in translation in a wall element (10) of the box, the seed measuring chamber being defined transversely, i.e. perpendicular to the fluting (30), on one side by the front face (20) of the drum that is adjacent to the fluted shaft, and on the other side by the front face (6) of the ring facing towards the inside of the box, the device being **characterized by** the fact that said front faces (20, 6) of the drum (2) and of the ring (4) are essentially frustoconical in shape and/or can be inscribed in a surface that is essentially frustoconical, with the apexes thereof being directed to the same side.

2. A device according to claim 1 for measuring out and dispensing seeds, the device being **characterized by** the fact that the value of the half-angle at the apex of said frustoconical surface or shape lies in the range 40° to 65°, and is preferably about 50° to 55°.

3. A device according to claim 1 or claim 2 for measuring out and dispensing seeds, the device being **characterized by** the fact that said ring (4) carries a peripheral set of teeth (40) meshing with a drive pinion (9) suitable for rotating the ring (4) and the fluted shaft (3).

4. A device according to any one of claims 1 to 3 for measuring out and dispensing seeds, the device being **characterized by** the fact that the ring (6) has a plurality of fingers that engage in the fluting (30) of the fluted shaft (3) and that are separated from one another by the fluting (31) of the shaft, said front face of the ring (6) being made up of a set of facets (61), each formed on one of said fingers, the facets being inscribed in a common frustoconical surface.

5. A device according to claim 4 for measuring out and dispensing seeds, the device being **characterized by** the fact that each facet (61) is subdivided by a low central spline (60), extending in a direction that intersects said horizontal axis X-X'.

6. A device according to claim 5 for measuring out and dispensing seeds, the device being **characterized by** the fact that the front face of said central opening (60) forms relative to said horizontal axis (X-X') an angle (γ) that is slightly greater than the angle (β) formed by said facet (61).

7. A device according to claim 6 for measuring out and dispensing seeds, the device being **characterized by** the fact that said angle (γ) is substantially equal to the angle (α) of the front face (20) of said drum (2), such that at the end of the stroke of the fluted shaft (3) out from the box, said splines (60) come to bear against said front face (20).

8. A device according to any preceding claim for measuring out and dispensing seeds, the device being **characterized by** the fact that it includes a flexible gasket in the form of a horizontal blade (70) secured to the box (1) and extending at the seed outlet opening (12), a portion of said blade bearing against the surface of the drum (2) and the remaining portion thereof facing the fluted shaft (3).

9. A device according to any preceding claim for measuring out and dispensing seeds, the device being **characterized by** the fact that it includes a coupling device (91) enabling the fluted shaft (3) to be driven in rotation in selective manner from a driving pinion (9), either via said ring (4), together with a certain amount of reduction in speed, or via a set of same-diameter gearwheels (92, 93), one of which (93) is constrained to rotate with the axis of the fluted shaft (3), without any change of speed or with a different speed ratio.

10. A device according to any preceding claim for measuring out and dispensing seeds, the device being **characterized by** the fact that said front faces (20, 6) of the drum (2) and of the ring (4) include respective outer zones (20a, 6a) that are frustoconical, and inner zones (20b, 6b) that are plane, being substantially orthogonal relative to said horizontal axis (X-X').

11. A device according to any preceding claim for measuring out and dispensing seeds, the device being **characterized by** the fact that said fluting (30) is lined at its end situated close to the drum (2) with flexible pads (35) that are elastically deformable under the action of thrust from the fingers (4) at the end of the stroke of the fingers in the direction for closing the fluting.

## Patentansprüche

1. Vorrichtung zum Dosieren und Verteilen von Saatgut für eine Sämaschine umfassend ein Gehäuse (1) mit einer am Fuß eines Aufgabebehälters angeordneten Eingangsöffnung (11) des Saatguts und einer Öffnung (12) zum Ausgang des Saatguts mit einer bestimmten Dosierung, wobei dieses Gehäuse (1) im Inneren mit einer entlang einer horizontalen Achse (X-X') axial verschieblich beweglichen Einheit ausgestattet ist, wobei die Einheit aus einer rotationsmäßig festliegenden Zylindertrommel (2) und einer gekehlten, koaxial zur Trommel (2) angeordneten rotierbaren Verteilungswelle (3) aufgebaut ist, Steuermittel (50, 51), die es erlauben, diese Einheit axial so zu verschieben, dass das Ende der gekehlten Welle (3) mehr oder weniger aus dem Gehäuse hervorsteht, um das Nutzvolumen der Kehlungen (30) zu variieren, die die Weiterleitung des Saatguts von der Eingangsöffnung (11) zur Ausgangsöffnung (12) sicherstellen, wobei diese gekehlte Welle (3) mit geringem Spiel einen Ring (4) durchdringt, mit dem sie rotationsfest verbunden ist und der in einem Wandelement (10) des Gehäuses rotationsmäßig geführt ist, aber bezüglich Verschiebung festgelegt ist, wobei sich die Dosierkammer des Saatguts quer, d.h. senkrecht zu den Kehlungen (30), auf einer Seite durch die an die gekehlte Welle angrenzende Vorderseite (20) der Trommel und auf der anderen Seite durch die zum Inneren des Gehäuses gewandte Vorderseite (6) des Rings begrenzt befindet, **dadurch gekennzeichnet, dass** die Vorderseiten (20) der Trommel (2) und (6) des Rings (4) eine im wesentlichen kegelstumpfartige Form haben und/oder in eine im wesentlichen kegelstumpfartige Oberfläche einbeschrieben sind, deren Spitzen auf dieselbe Seite gerichtet sind.

2. Vorrichtung zum Dosieren und Verteilen von Saatgut nach Anspruch 1, **dadurch gekennzeichnet, dass** der Wert des Halbwinkels an der Spitze der kegelstumpfartigen Form oder Oberfläche zwischen 40 und 65° enthalten ist und vorzugsweise in der Größenordnung von 50 bis 55° ist.

3. Vorrichtung zum Dosieren und Verteilen von Saatgut nach Anspruch 1 oder 2, **dadurch gekennzeichnet, dass** der Ring (4) eine Randverzahnung (40) trägt, die mit einem Motorritzel (9) ineinander greift, das geeignet ist, den Ring (4) und die gekehlte Welle (3) in Rotation anzutreiben.

4. Vorrichtung zum Dosieren und Verteilen von Saatgut nach einem der Ansprüche 1 bis 3, **dadurch gekennzeichnet, dass** der Ring (6) mehrere Finger umfasst, die in den Kehlungen (30) der gekehlten Welle (3) eingreifen und durch die Rippen (31) dieser letztgenannten voneinander getrennt sind, wobei die Vorderseite des Rings (6) durch einen Satz von Facetten (61) gebildet wird, die jeweils auf einem dieser Finger ausgebildet sind, wobei diese Facetten in dieselbe kegelstumpfartige Oberfläche einbeschrieben sind.

5. Vorrichtung zum Dosieren und Verteilen von Saatgut nach Anspruch 4, **dadurch gekennzeichnet, dass** jede Facette (61) durch eine zentrale Rippe (60) von geringer Höhe unterteilt ist, deren Richtung die horizontale X-X' Achse schneidet.

6. Vorrichtung zum Dosieren und Verteilen von Saatgut nach Anspruch 5, **dadurch gekennzeichnet, dass** die Vorderseite dieser zentralen Rippe (60) mit der horizontalen Achse (X-X') einen Winkel (γ) bildet, der leicht größer ist als der (β) von der Facette (61) gebildete

7. Vorrichtung zum Dosieren und Verteilen von Saatgut nach Anspruch 6, **dadurch gekennzeichnet, dass** dieser Winkel (γ) im wesentlichen gleich dem Winkel (α) der Vorderseite (20) der Trommel (2) ist, so dass am Ende des Verlaufs der gekehlten Welle (3) außerhalb des Gehäuses die Rippen (60) in Anschlag gegen diese Vorderseite (20) kommen.

8. Vorrichtung zum Dosieren und Verteilen von Saatgut nach einem der vorhergehenden Ansprüche, **dadurch gekennzeichnet, dass** sie eine flexible Dichtung in Form einer horizontalen Lamelle (70) umfasst, die am Gehäuse (1) befestigt ist und sich in Höhe der Ausgangsöffnung (12) des Saatguts erstreckt, wobei ein Teil dieser Lamelle gegen die Oberfläche der Trommel (2) anliegt und ihr übriger Teil sich gegenüber der gekehlten Welle (3) befindet.

9. Vorrichtung zum Dosieren und Verteilen von Saatgut nach einem der vorhergehenden Ansprüche, **dadurch gekennzeichnet, dass** sie eine Kupplungsvorrichtung (91) umfasst, die es erlaubt, die gekehlte Welle (3) auf selektive Weise von einem Motorritzel (9) rotationsmäßig anzutreiben, sei es mit Hilfe des Rings (4), dies mit einer bestimmten Geschwindigkeitsreduzierung, sei es mit Hilfe einer Gruppe von Ritzeln mit demselben Durchmesser (92, 93), von denen das eine (93) rotationsmäßig fest mit der Achse der gekehlten Welle (3) verbunden ist, dies ohne Geschwindigkeitsveränderung oder mit einem unterschiedlichen Geschwindigkeitsverhältnis.

10. Vorrichtung zum Dosieren und Verteilen von Saatgut nach einem der vorhergehenden Ansprüche, **dadurch gekennzeichnet, dass** die Vorderseiten (20) der Trommel (2) und (6) des Rings (4) eine kegelstumpfartige Außenzone (20a, bzw. 6a), und eine ebene, zur horizontalen Achse (X-X') im wesentlichen orthogonale Innenzone (20b, bzw. 6b) umfassen.

11. Vorrichtung zum Dosieren und Verteilen von Saatgut nach einem der vorhergehenden Ansprüche, **dadurch gekennzeichnet, dass** die Kehlungen (30) an ihrem zur Nachbarschaft der Trommel (2) gelegenen Ende mit elastischen Puffern (35) ausgerüstet sind, die unter der Druckwirkung der Finger (4) am Ende des Verlaufs der letztgenannten in der Richtung der Absperrungen der Kehlungen elastisch deformierbar sind.
